# EUROPÄISCHE PATENTSCHRIFT

(11) **EP 1 758 456 B1**
(45) Veröffentlichungstag und Bekanntmachung des Hinweises auf die Patenterteilung: **05.03.2008**
(21) Anmeldenummer: 05752232.8
(22) Anmeldetag: 16.06.2005
(51) Int. Cl.: A01N 43/653

(54) **VERWENDUNG VON (E)-5-(4-CHLORBENZYLIDEN)-2,2-DIMETHYL-1-(1H-1,2,4-TRIAZOL-1-YLMETHYL)CYCLOPENTANOL ZUR BEKÄMPFUNG DES ROSTBEFALLS AN SOJAPFLANZEN**
USE OF (E)-5-(4-CHLORBENZYLIDEN)-2,2-DIMETHYL-1-(1H-1,2,4-TRIAZOL-1-YLMETHYL)CYCLOPENTANOL FOR COMBATING RUST ATTACKS ON SOYA PLANTS
(E)-5-(4-CHLOROBENZYLIDEN)-2,2-DIMETHYL-1-(H-1,2,4-TRIAZOL-1-YLMETHYL)CYCLOPENTANOL ET SON UTILISATION POUR LUTTER CONTRE L'ATTAQUE DES PLANTES DE SOJA PAR LA ROUILLE

(30) Priorität: 17.06.2004 DE 102004029338
(43) Veröffentlichungstag der Anmeldung: 07.03.2007
(73) Patentinhaber: BASF SE, 67056 Ludwigshafen (DE)
(72) Erfinder: LOPEZ CASANELLO, Juan Diego, 67346 Speyer (DE); SPEAKMAN, John-Bryan, 67273 Bobenheim (DE)
(74) Vertreter: Reitstötter - Kinzebach
(86) Internationale Anmeldenummer: PCT/EP2005/006499
(87) Internationale Veröffentlichungsnummer: WO 2005/122771

(56) Entgegenhaltungen:
- WO-A-02/21913
- WO-A-02/051246
- CA-A1- 2 437 183

## Beschreibung

Die Erfindung betrifft die Verwendung von (*E*)-5-(4-Chlorbenzyliden)-2,2-dimethyl-1-(1*H*-1,2,4-triazol-1-ylmethyl)cyclopentanol zur Bekämpfung des Rostbefalls an Sojapflanzen.

Bis vor kurzem gab es in den wichtigsten Anbaugebieten für Sojakulturen keine durch Schadpilze hervorgerufene Erkrankungen wie Rost, die von wirtschaftlicher Bedeutung waren. In den Jahren 2001 und 2002 trat jedoch in Südamerika vermehrt starker Rostbefall in Sojakulturen, hervorgerufen durch die Schadpilze *Phakopsora pachyrhizi* und *Phakopsora meibomiae* auf. Es kam zu erheblichen Ernte- und Ertragsausfällen.

Die meisten gängigen Fungizide sind für die Bekämpfung von Rosterkrankungen in Sojakulturen nicht geeignet, weil sie die Vermehrung der die Rosterkrankung hervorrufenden Schadpilze wie *Phakopsora pachyrhizi* und *Phakopsora meibomiae* nicht in ausreichendem Maße hemmen. Zudem besteht die Gefahr, dass der fungizide Wirkstoff die Symbiose von Knöllchenbakterien (Rhizobium und Bradyrrhizobium) und Sojapflanzen nachteilig beeinflusst und auf diese Weise den Ertrag mindert.

Die CA 2,437,183 beschreibt die Verwendung von Strobilurinen zur Behandlung von Rosterkrankungen an Leguminosen.

Es besteht jedoch ein grundsätzlicher Bedarf, weitere Wirkstoffe gegen bestimmte Pilzerkrankungen bereitzustellen, um Resistenzbildung zu vermeiden.

Aufgabe war daher die Bereitstellung eines weiteren Mittels, das eine wirksame Bekämpfung von Rosterkrankungen an Sojapflanzen ermöglicht. Das Mittel sollte insbesondere die Symbiose von Knöllchenbakterien und Sojapflanzen nicht nachteilig beeinflussen.

Überraschenderweise wurde nun gefunden, dass (*E*)-5-(4-Chlorbenzyliden)-2,2-dimethyl-1-(1*H*-1,2,4-triazol-1-ylmethyl)cyclopentanol die Vermehrung der obengenannten Schadpilze wirksam hemmt und somit zur Bekämpfung der durch diese Schadpilze hervorgerufenen Rosterkrankung an Sojapflanzen geeignet ist.

Die Erfindung betrifft daher die Verwendung von (*E*)-5-(4-chlorbenzyliden)-2,2-dimethyl-1-(1*H*-1,2,4-triazol-1-ylmethyl)cyclopentanol zur Bekämpfung des Rostbefalls an Sojapflanzen, sowie ein Verfahren zur Bekämpfung des Rostbefalls an diesen Pflanzen, bei dem man die Pflanze, die einer solchen Behandlung bedarf, oder Teile dieser Pflanze oder den Boden, der für die Anzucht oder das Wachstum der Pflanze vorgesehen ist, mit (*E*)-5-(4-chlorbenzyliden)-2,2-dimethyl-1-(1*H*-1,2,4-triazol-1-ylmethyl)cyclopentanol behandelt.

Der Einsatz von (*E*)-5-(4-Chlorbenzyliden)-2,2-dimethyl-1-(1*H*-1,2,4-triazol-1-ylmethyl)cyclopentanol verhindert wirksam eine Infektion der Sojapflanzen mit der Rosterkrankung (protektive Behandlung) und führt überdies auch zu einer Heilung der bereits erkrankten Pflanzen (kurative Behandlung).

Überraschenderweise lässt sich ein Rostbefall der Sojapflanzen auch durch Behandlung des Saatgutes mit (*E*)-5-(4-Chlorbenzyliden)-2,2-dimethyl-1 -(1*H-*1,2,4-triazol-1-ylmethyl)cyclopentanol wirksam verhindern.

Zudem hat sich überraschenderweise gezeigt, dass die Symbiose der Knöllchenbakterien mit den Sojapflanzen durch Einsatz von (*E*)-5-(4-chlorbenzyliden)-2,2-dimethyl-1-(1*H*-1,2,4-triazol-1-ylmethyl)cyclopentanol nicht oder zumindest nicht in nennenswertem Ausmaß nachteilig beeinflusst wird.

Erfindungsgemäß geeignet ist sowohl das Racemat von (*E*)-5-(4-Chlorbenzyliden)-2,2-dimethyl-1-(1*H*-1,2,4-triazol-1-ylmethyl)cyclopentanol als auch dessen Enantiomere und nicht-racemische Mischungen dieser Enantiomere. (*E*)-5-(4-Chlorbenzyliden)-2,2-dimethyl-1-(1*H*-1,2,4-triazol-1-ylmethyl)cyclopentanol ist dem Fachmann unter der Bezeichnung Triticonazol bekannt und kommerziell erhältlich.

Der Begriff "Pflanzenteile" umfasst hier und im Folgenden sowohl die oberirdischen Pflanzenteile wie Blattwerk, die unterirdischen Pflanzenteile, d.h. das Wurzelwerk, sowie die Früchte und Samen.

Zur Bekämpfung des Rostbefalls behandelt man die Sojapflanzen oder die vor Rostbefall zu schützenden Pflanzenteile oder den Erdboden mit einer zur Bekämpfung des Rostbefalls ausreichenden Menge einer Wirkstoffaufbereitung, enthaltend Triticonazol. Die Art der applizierten Wirkstoffaufbereitung richtet sich in an sich bekannter Weise nach dem jeweiligen Verwendungszweck und der Applikationsart. Die Art der Wirkstoffaufbereitung ist zweckmäßigerweise so gewählt, dass eine feine und gleichmäßige Verteilung des/der Wirkstoffe gewährleist wird.

In einer ersten bevorzugten Ausführungsform der Erfindung werden die oberirdischen Pflanzenteile der Sojapflanzen, insbesondere die Blätter mit einer geeigneten Aufbereitung des Wirkstoffs, behandelt. Vorzugsweise kommt Triticonazol in einer wässrigen Spritzbrühe zum Einsatz.

Die für eine protektive Behandlung der oberirdischen Pflanzenteile erforderlichen Aufwandmengen an Triticonazol liegen in der Regel bei 10 bis 1000 g/ha, insbesondere bei 20 bis 500 g/ha.

Die für eine kurative Behandlung der oberirdischen Pflanzenteile erforderlichen Aufwandmengen an Triticonazol liegen in der Regel bei 10 bis 1000 g/ha, insbesondere bei 20 bis 500 g/ha.

In einer anderen Ausführungsform der Erfindung wird das Saatgut mit einer für die Saatgutbehandlung geeigneten Aufbereitung des Wirkstoff behandelt. Wirkstoffaufbereitungen für die Saatgutbehandlung sind insbesondere wässrige Spritzbrühen, direkt applizierbare Stäube und ULV-Lösungen. Bei der Saatgutbehandlung wird Triticonazol im allgemeinen in einer Menge von 1 bis 500 g, vorzugsweise 10 bis 200 g je 100 Kilogramm Saatgut eingesetzt.

Weiterhin lassen sich mit dem erfindungsgemäßen Verfahren auch andere Schadpilze, die bei Sojapflanzen häufig auftreten, sehr gut bekämpfen. Die wichtigsten Pilzkrankheiten in Soja sind im folgenden aufgeführt:
- Auflaufkrankheit (damping-off), hervorgerufen durch *Rhizoctonia solani,*
- Stengelgrundfäule (stem rot), hervorgerufen durch *Fusarium solani,,*
- Stengelgrundfäule (stem rot), hervorgerufen durch *Fusarium spp.,*
- Braunfäule an Stengel und Schoten (stem and pot blight), hervorgerufen *Phomopsis phaseoli* + *spp.,*
- Blattfleckenkrankheit / Rostfleckenkrankheit (Purple blotch), hervorgerufen durch *Cercospora kikuchi,*
- Froschauge an Blättern (Frogeye leaf spot), hervorgerufen durch *Cercospora sojina,*
- Auflaufkrankheit (seedling blight), hervorgerufne durch *Pythium spp.,*
- Brennfleckenkrankheit (stem antrachnose), hervorgerufen durch *Colletotrichum demativum var. truncata,*
- Blattfleckenkrankheit (brown spot), hervorgerufen durch *Septoria glycines,*
- Blattfleckenkrankheit (leaf spot), hervorgerufen durch *Cercospora spp.,*
- Echter Mehltau (powdery mildew), hervorgerufen durch *Erysiphe polygoni.*

Triticonazol können zur Verbreiterung des Wirkspektrums auch zusammen mit anderen Wirkstoffen angewendet werden, die beim Anbau von Soja eingesetzt werden, z.B. mit Herbiziden, Insektiziden, Nematiziden, Wachstumsregulatoren, Fungiziden oder auch mit Düngemitteln.

Die folgende Liste von Wirkstoffen, mit denen Triticonazol erfindungsgemäß angewendet werden kann, soll die Kombinationsmöglichkeiten erläutern, nicht aber einschränken:
Fungizide:
   - Acylalanine, insbesondere Oxadixyl;
   - Aminderivate, insbesondere Guazatine, Iminoctadine;
   - Azole, insbesondere Difenoconazole, Epoxyconazol, Fenbuconazol, Fluquiconazol, Flusilazol, Flutriafol, Hexaconazol, Imazalil, Metconazol, Myclobutanil, Penconazol, Propiconazol, Prochloraz, Prothioconazol, Tebuconazol;
   - Dicarboximide wie Iprodion, Procymidon, Vinclozolin;
   - Heterocylische Verbindungen wie Anilazin, Benomyl, Boscalid, Carbendazim, Carboxin, Oxycarboxin, Cyazofamid, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine;
   - Nitrophenylderivate, wie Binapacryl, Dinocap, Dinobuton, Nitrophthal-isopropyl;
   - Phenylpyrrole wie Fenpiclonil oder Fludioxonil;
   - Schwefel;
   - Sonstige Fungizide wie Acibenzolar-S-methyl, Benthiavalicarb, Carpropamid, Chlorothalonil, Cyflufenamid, Cymoxanil, Dazomet, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid;
   - Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin;
   - Sulfensäurederivate wie Captafol, Captan, Dichlofluanid, Folpet, Tolylfluanid Zimtsäureamide und Analoge wie Dimethomorph, Flumetover oder Flumorph.
Insektizide/Acarizide:
   - Organo(thio)phosphate, insbesondere Acephate;
   - Carbamate, insbesondere Alanycarb, Benfuracarb, Bendiocarb, Carbosulfan, Fenoxycarb, Furathiocarb, Methiocarb, Methomyl, Thiodicarb, Triazamate;
   - Pyrethroide wie Allethrin, Bifenthrin, Cyfluthrin, Cyphenothrin, Cypermethrin sowie die alpha-, beta-, theta- und zeta-Isomere, Deltamethrin, Esfenvalerate, Ethofenprox, Fenpropathrin, Fenvalerate, Cyhalothrin, Lambda-Cyhalothrin, Imiprothrin, Permethrin, Prallethrin, Pyrethrin 1, Pyrethrin II, Silafluofen, Tau-Fluvalinate, Tefluthrin, Tetramethrin, Tralomethrin, Transfluthrin, Zeta-Cypermethrin;
   - Neonicothinoide wie Flonicamid, Clothianidin, Dinotefuran, Imidacloprid, Thiamethoxam, Nitenpyram, Nithiazin, Acetamiprid, Thiacloprid;
   - Pyrazol-Insektizide wie Acetoprole, Ethiprole, Fipronil, Tebufenpyrad, Tolfenpyrad und Vaniliprole;
   - Weiterhin Spinosad und Thiamethoxam.

### Wachstumsregulatoren wie Chlormethquat und Mepiquat

Ganz besonders geeignet für die erfindungsgemäße Verwendung haben sich Mischungen von Triticonazol mit einem weiteren Fungizid aus der Gruppe der Azolfungizide bewährt. Bevorzugte Azolfungizide sind Epoxyconazol, Tebuconazol, Fluquinconazol, Flutriafol, Metconazol, Myclobutanil, Cycproconazol, Prothioconazol und Propiconazol. Durch gemeinsame Anwendung von Triticonazol mit einem weiteren Azolfungizid erreicht man eine Wirkungssteigerung, so dass insgesamt geringere Aufwandmengen an Fungizid zur Erreichung der gewünschten fungiziden Wirkung erforderlich sind.

Sofern man Triticonazol zusammen mit einem Azolfungizid einsetzt, wird man vorzugsweise die Wirkstoffe in einem Gewichtsverhältnis von Triticonazol zu Azolfungizid von 1:100 bis 100:1 und insbesondere 1:20 bis 20:1 einsetzen. Die Auffwandmengen an weiterem Azolfungizid betragen dann vorzugsweise 1 bis 500 g/ha und insbesondere 5 bis 300 g/ha.

Ebenfalls besonders geeignet für die erfindungsgemäße Verwendung sind Mischungen von Triticonazol mit wenigstens einem weiteren Fungizid aus der Gruppe Strobilurine, das ausgewählt ist unter Trifloxystrobin, Pyraclostrobin, Orysastrobin, Fluoxastrobin und Azoxystrobin.

Sofern man Triticonazol zusammen mit einem der vorgenannten Strobilurine einsetzt, wird man vorzugsweise die Wirkstoffe in einem Gewichtsverhältnis von Triticonazol zu Strobilurin von 1:100 bis 100:1 und insbesondere 1:20 bis 20:1 einsetzen. Die Auffwandmengen an Strobilurin betragen dann vorzugsweise 1 bis 500 kg/ha und insbesondere 5 bis 300 kg/ha.

Sofern Triticonazol zusammen mit einem weiteren fungiziden Wirkstoff eingesetzt wird, kann dieser gleichzeitig mit Triticonazol oder in einem engen zeitlichen Abstand, z.B. innerhalb weniger Tage vor oder nach der Behandlung mit Triticonazol angewendet werden. Bei gleichzeitiger Anwendung kann die Behandlung der Sojapflanze in einem Arbeitsgang erfolgen, bei dem man eine Zusammensetzung, enthaltend Triticonazol und den weitere fungiziden Wirkstoff, appliziert oder separaten Arbeitsgängen, bei denen man verschiedene Zusammensetzungen der einzelnen Wirkstoffe appliziert.

Weiterhin hat es sich insbesondere als vorteilhaft erwiesen, Triticonazol zusammen mit wenigstens einem Wirkstoff einzusetzen, der gegen stechende oder saugende Insekten und sonstige Arthropoden z.B. aus der Ordnung der
- Coleoptera, insbesondere Phyllophaga sp. wie Phyllophaga cuyabana, Sternechus sp. wie Sternechus pingusi, Sternechuns subsignatus, Promecops sp. wie Promecops carinicollis, Aracanthus sp. wie Aracanthus morei, und Diabrotica sp. wie Diabrotica speciosa, Diabrotica longicornis, Diabrotica 12-punctata, Diabrotica virgifera,
- Lepidoptera insbesondere Elasmopalpus sp. wie Elasmopalpus lignosellus,
- Isoptera, insbesondere Rhinotermitida,
- Homoptera, insbesondere Dalbulus maidis
oder gegen Nematoden, einschließlich Wurzelknotennematoden, z.B. Meloidogyne spp. wie Meloidogyne hapla, Meloidogyne incognita, Meloidogyne javanica, und andere Meloidogyne species; Cysten bildende Nematoden wie Globodera rostochiensis und andere Globodera species; Heterodera avenae, Heterodera glycines, Heterodera schachtii, Heterodera trifolii, und andere Heterodera species; Gallennematoden z.B. Anguina species; Stengel- und Blattnematoden wie Aphelenchoides species wirksam ist.

Insbesondere hat es sich bewährt, Triticonazol zusammen mit wenigstens einem Insektizid aus der Gruppe der Neonicotinoide, speziell mit Imidacloprid, Thiametoxam oder Clothiamidin, oder mit einem Insektizid aus der Gruppe der Pyrazol-Insektizide, speziell mit Fipronil, einzusetzen.

Insbesondere hat es sich bewährt, Triticonazol gemeinsam mit einem Insektizid, insbesondere einem Neonicotinoid oder einem Pyrazol-Insektizid, zur Saatgutbehandlung oder zur Behandlung von Sämlingen der Sojapflanzen einzusetzen.

Sofern Triticonazol zusammen mit einem weiteren insektiziden Wirkstoff eingesetzt wird, kann dieser gleichzeitig mit Triticonazol oder in einem engen zeitlichen Abstand, z.B. innerhalb weniger Tage vor oder nach der Behandlung mit Triticonazol angewendet werden. Bei gleichzeitiger Anwendung kann die Behandlung der Sojapflanzen in einem Arbeitsgang erfolgen, bei dem man eine Zusammensetzung, enthaltend Triticonazol und den weitere insektiziden Wirkstoff, appliziert oder separaten Arbeitsgängen, bei denen man verschiedene Zusammensetzungen der einzelnen Wirkstoffe appliziert.

Da Triticonazol die Symbiose der Knöllchenbakterien mit den Sojapflanzen nicht nachteilig beeinflusst, kann die Behandlung des Saatguts mit dem Wirkstoff gleichzeitig oder in engem zeitlichen Zusammenhang mit der Infektion des Saatguts mit den Knöllchenbakterien erfolgen. Beispielsweise kann man den Wirkstoff gemeinsam mit einer geeigneten Aufbereitung der Knöllchenbakterien, z.B. einer wässrigen Suspension der Knöllchenbakterien, dem Saatgut applizieren.

Triticonazol und gegebenenfalls der/die weitere(n) Wirkstoff(e) können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten angewendet werden. Die Anwendung erfolgt typischerweise durch Versprühen, Vernebeln, Verstäuben, Verstreuen oder Gießen. Die Anwendungsformen- und Methoden sollten in jedem Fall möglichst die feinste Verteilung der erfindungsgemäßen Wirkstoffe gewährleisten.

Wässrige Anwendungsformen der Wirkstoffe können aus handelsüblichen Formulierungen Wirkstoffe, z.B. aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Konzentrationen an Triticonazol und gegebenenfalls weiterem(n) Wirkstoff(e) in den anwendungsfertigen Zubereitungen können in größeren Bereichen variiert werden. Im allgemeinen liegen sie zwischen 0,0001 und 10%, vorzugsweise zwischen 0,01 und 1 % (Gew.-% Gesamtwirkstoffgehalt, bezogen auf das Gesamtgewicht der anwendungsfertigen Zubereitung).

Triticonazol und gegebenenfalls der/die weitere(n) Wirkstoff(e) können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvanten, Herbizide, Fungizide, Insektizide, Nematizide aber auch andere Schädlingsbekämpfungsmittel z.B. Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die Formulierungen werden in bekannter Weise hergestellt, z.B. durch Verstrecken des Wirkstoffs mit Lösungsmitteln und/oder Trägerstoffen, gewünschtenfalls unter Verwendung von oberflächenaktiven Substanzen, d.h. Emulgiermitteln und Dispergiermitteln. Als Lösungsmittel / Trägerstoffe kommen dafür im wesentlichen in Betracht:
- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, Methyl-hydroxybutylketon, Diacetonalkohol, Mesityloxid, Isophoron), Lactone (z.B. gamma-Butryolacton), Pyrrolidone (Pyrrolidon, N-methylpyrrolidon, N-Ethylpyrrolidon, n-Octylpyrrolidon), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Mesityloxid, Isophoron, stark polare Lösungsmittel, z.B. Dimethylsulfoxid, 2-Pyrrolidon, N-Methylpyrrolidon, Butyrolacton oder Wasser in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.%, vorzugsweise zwischen 0,1 und 90 Gew.%, insbesondere 5 bis 50 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen sind:
1. Produkte zur Verdünnung in Wasser
   A) Wasserlösliche Konzentrate (SL)
      10 Gew.-Teile Triticonazol werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.
   B) Dispergierbare Konzentrate (DC)
      20 Gew.-Teile Triticonazol werden in Cyclohexanon unter Zusatz eines Dispergiermittels z.B. Polyvinylpyrrolidon gelöst. Bei Verdünnung in Wasser ergibt sich eine Dispersion.
   C) Emulgierbare Konzentrate (EC)
      15 Gew.-Teile Triticonazol werden in Xylol unter Zusatz von Ca-Dodecylbenzolsulfonat und Ricinusölethoxylat (jeweils 5 %) gelöst. Bei der Verdünnung in Wasser ergibt sich eine Emulsion.
   D) Emulsionen (EW, EO)
      40 Gew.-Teile Triticonazol werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.
   E) Suspensionen (SC, OD)
      20 Gew.-Teile Triticonazol werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.
   F) Wasserdispergierbare und wasserlösliche Granulate (WG, SG)
      50 Gew.-Teile Triticonazol werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.
   G) Wasserdispergierbare und wasserlösliche Pulver (WP, SP)
      75 Gew.-Teile Triticonazol werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.
2. Produkte für die Direktapplikation
   H) Stäube (DP)
      5 Gew.-Teile Triticonazol werden fein gemahlen und mit 95 % feinteiligem Kaolin innig vermischt. Man erhält dadurch ein Stäubemittel.
   I) Granulate (GR, FG, GG, MG)
      0.5 Gew.-Teile Triticonazol werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.
   J) ULV-Lösungen (UL)
      10 Gew.-Teile Triticonazol werden in einem organischen Lösungsmittel z.B. Xylol gelöst. Dadurch erhält man ein Produkt für die Direktapplikation.

Geeignete Formulierungen für die Behandlung von Saatgut sind beispielsweise:

| | |
|---|---|
| A | Lösliche Konzentrate (SL, LS) |
| D | Emulsionen (EW, EO, ES) |
| E | Suspensionen (SC, OD, FS) |
| F | Wasserdispergierbare und wasserlösliche Granulate (WG, SG) |
| G | Wasserdispergierbare und wasserlösliche Pulver (WP, SP, WS) |
| H | Stäube und staubartige Pulver (DP, DS) |

Bevorzugte FS Formulierungen von Triticonazol zur Saatgutbehandlung umfassen üblicherweise 0.5 bis 80% Wirkstoff, 0,05 bis 5 % Netzmittel, 0.5 bis 15 % Dispergiermittel, 0,1 bis 5 % Verdicker, 5 bis 20 % Frostschutzmittel, 0,1 bis 2 % Entschäumer, 1 to 20 % Pigment und/oder Farbstoff, 0 bis 15 % Klebe- bzw. Haftmittel, 0 bis 75 % Füllstoff/Vehikel, und 0,01 to 1 % Konservierungsmittel.

Geeignete Pigmente bzw. Farbstoffe für Formulierungen von Triticonazol zur Saatgutbehandlung sind Pigment blue 15:4, Pigment blue 15:3, Pigment blue 15:2, Pigment blue 15:1, Pigment blue 80, Pigment yellow 1, Pigment yellow 13, Pigment red 112, Pigment red 48:2, Pigment red 48:1, Pigment red 57:1, Pigment red 53:1, Pigment orange 43, Pigment orange 34, Pigment orange 5, Pigment green 36, Pigment green 7, Pigment white 6, Pigment brown 25, Basic violet 10, Basic violet 49, Acid red 51, Acid red 52, Acid red 14, Acid blue 9, Acid yellow 23, Basic red 10, Basic red 108.

Als Netzmittel und Dispergiermittel kommen insbesondere die obengenannten oberflächenaktiven Substanzen in Betracht. Bevorzugte Netzmittel sind Alkylnaphthalin-Sulfonate, wie Diisopropyl-oderDiisobutyl-naphthalin-Sulfonate. Bevorzugte Dispergiermittel sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tri-stryrylphenolpolyglykolether, beispielsweise Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkyl-arylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpoly-glykoletheracetal, Sorbitester und Methylcellulose zu nennen. Geeignete anionische Dispergiermittel sind insbesondere Alkali-, Erdalkali-, Ammoniumsalze von Ligninsulfonsäure, Naphthalinsulfonsäure, Phenolsulfonsäure, Dibutylnaphthalinsuffonsäure, Alkylarylsulfonate, Alkylsulfate, Alkylsulfonate, Fettalkoholsulfate, Fettsäuren und sulfatierte Fettalkoholglykolether zum Einsatz, ferner Arylsulfonat-Formaldehydkondensate, z.B. Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Ligninsulfonate, Ligninsulfitablaugen, phosphatierte oder sulfatierte Derivate der Methylcellulose und Polyacrylsäuresalze.

Als Frostschutzmittel können gurndsätzlich alle Substanze eingesetzt werden, die den Schmelzpunkt von Wasser erniedrigen. Zu den geeigneten Frostschutzmittel zählen Alkanole wie Methanol, Ethanol, Isopropanol, Butanole, Glykol, Glycerin, Diethylenglykol und dergleichen.

Als Verdickungsmittel kommen alle für derartige Zwecke in agrochemischen Mitteln einsetzbaren Stoffe in Frage, beispielsweise Cellulose-derivate, Polyacrylsäurederivate, Xanthan, modifizierte Tone und hochdisperse Kieselsäure.

Als Entschäumer können alle zur Formulierung von agrochemischen Wirkstoffen üblichen schaumhemmenden Stoffe eingesetzt werden. Besonders geeignet sind Silikonentschäumer und Magnesiumstearat.

Als Konservierungsmittel können alle für derartige Zwecke in agrochemischen Mitteln Konservierungsmittel eingesetzt werden. Beispielhaft genannt seien Dichlorophen, Isothiazolene wie 1,2-Benzisothiazol-3(2H)-on, 2-Methyl-2H-isothiazol-3-on-Hydrochlorid, 5-Chlor-2-(4-chlorbenzyl)-3(2H)-isothiazolon, 5-Chlor-2-methyl-2H-isothiazol-3-on, 5-Chlor-2-methyl-2H-isothiazol-3-on, 5-Chlor-2-methyl-2H-isothiazol-3-on-Hydrochlorid, 4,5-Dichlor-2-cyclohexyl-4-isothiazolin-3-on, 4,5-Dichlor-2-octyl-2H-isothiazol-3-on, 2-Methyl-2H-isothiazol-3-on, 2-Methyl-2H-isothiazol-3-on-Calciumchlorid-Komplex, 2-Octyl-2H-isothiazol-3-on und Benzylalkoholhemiformal.

Kleber/Haftmittel gibt man zu zur Verbesserung der Adhesion der wirksamen Bestandteile auf dem Saatgut nach Behandlung. Geeignete Kleber sind oberflächenaktive Blockcopolymere auf Basis von EO/PO aber auch Polyvinylalcohole, Polyvinylpyrrolidone, Polyacrylate, Polymethacrylate, Polybutene, Polyisobutene, Polystyrol, Polyethylenamine, Polyethylenamide, Polyethyleneimine (Lupasol®, Polymin®), Polyether und Copolymere, die von diesen Polymeren abgeleitet sind.

Zur Behandlung des Saatguts können grundsätzlich alle üblichen Methoden der Saatgutbehandlung bzw. Saatgutbeize eingesetzt werden. Im einzelnen geht man bei der Behandlung so vor, dass man das Saatgut mit der jeweils gewünschte Menge an Beizmittel-Formulierungen entweder als solche oder nach vorherigem Verdünnen mit Wasser in einer hierfür geeigneten Vorrichtung, beispielsweise einer Mischvorrichtung für feste oder fest/flüssige Mischungspartner bis zur gleichmäßigen Verteilung des Mittels auf dem Saatgut mischt. Gegebenenfalls schließt sich ein Trocknungsvorgang an.

### Anwendungsbeispiele

### Beispiel 1: Kurative Behandlung befallener Sojapflanzen

In Feldversuchen wurden Sojapflanzen verschiedener Sorten mit einem Vorbefall durch *Phakopsora pachyrhizi* auf den Blättern mit praxisüblichen Geräten mit einer wässrigen Aufbereitung von Triticonazol behandelt. Die Aufwandmengen lagen bei 20 bis 200 g/ha. 25 Tage nach der Behandlung hatte sich der Befall auf den unbehandelten, aber befallenen Blättern so stark entwickelt, dass er 50 % der Blattfläche bedeckte. In den behandelten Parzellen war dagegen der Befall durch *Phakopsora pachyrhizi* nur auf maximal 25 % angestiegen. Diese Befallsreduktion zu einer deutlichen Ertragssteigerung gegenüber der unbehandelten Kontrolle.

### Beispiel 2: Protektive Behandlung befallener Sojapflanzen

In Feldversuchen wurden Sojapflanzen verschiedener Sorten mit einer wässrigen Aufbereitung von Triticonazol behandelt. Die Aufwandmengen lagen bei 20 bis 200 g/ha. Anschließend wurden die Pflanzen mit *Phakopsora pachyrhizi* infiziert. 25 Tage nach der Behandlung hatte sich der Befall auf den unbehandelten, aber infizierten Blättern so stark entwickelt, dass er 50 % der Blattfläche bedeckte. In den behandelten Parzellen war dagegen der Befall durch *Phakopsora pachyrhizi* nur auf maximal 25 % angestiegen. Diese Befallsreduktion zu einer deutlichen Ertragssteigerung gegenüber der unbehandelten Kontrolle.

### Beispiel 3: Saatgutbehandlung

Saatgut von Sojapflanzen der Sorte "Embrapa 48" wurde mit einer für die Saatbeize geeigneten Zusammensetzung, enthaltend Triticonazol als aktive Substanz, mit Aufwandmengen im Bereich von 12,5 g, 25 g, 50 g, 100 g und 250 g Triticonazol je 100 kg Saatgut behandelt. Anschließend wurde das Saatgut ausgesät. Die so angezogenen Sojapflanzen wurden dann mit *Phakopsora pachyrhizi* infiziert. Nach 50 Tagen wurde der Rostbefall der Blattflächen ermittelt. Der Befall in den Pflanzen aus unbehandeltem Saatgut lag bei wenigstens 50% wohingegen der Befall der Blattfläche in Pflanzen aus behandeltem Saatgut in allen Fällen weniger als 25 % betrug.

### Beispiel 4: Protektive Wirksamkeit von Triticonazole über Saatgutbehandlung gegen Sojabohnenrost verursacht durch Phakopsora pachyrhizi

Eine definerte Menge einer handelsüblichen Fertigformulierung von Triticonazol (Suspensionskonzentrat, Wirkstoffgehalt 200 g/l) wurde entsprechend den gewünschten Aufwandmengen (AWM) von 5, 15, 30 und 50 g ai/100 kg Sojabohnen mit Wasser zu einen Gesamtvolumen von 1 Ltr./ 100 kg Sojabohnen verdünnt.

Sojabohnensamen der Sorte " IAC 8.2 " wurden mit der so hergestellten wässrigen Suspension von Triticonazol in einer kommerziellen Beizmaschine behandelt und anschliessend in einem Feldversuch in Brasilien ausgesät. Die Blätter der so gewachsenen Sojapflanzen wurden in einem entsprechenden Wachstumsstadium mit einer Sporensuspension des Sojarostes (*Phakopsora pachyrhizi*) inokuliert. Danach wurden die Pflanzen über Nacht mit einem feintropfigem Beregnungssystem für 6-8 h feucht gehalten. Während dieser Zeit keimten die Sporen aus und die Keimschläuche drangen in das Blattgewebe ein. 60 Tage nach der Behandlung (60 DAT) bzw. Aussaat wurde das Ausmaß der Rostpilzentwicklung auf den Blättern der infizierten Pflanzen ermittelt.

Die Ergebnisse sind in Tabelle 1 zusammengefasst:

**Tabelle 1:**

| AWM | % befallene Blattfläche |
|---|---|
| g /100 kg | (60 DAT)* |
| 0 (unbehandelt) | 40 |
| 5 | 23 |
| 15 | 11 |
| 30 | 9 |
| 50 | 3 |

### Beispiel 5: Kurative Wirksamkeit von Triticonazole über Spritzapplikation gegen Sojabohnenrost verursacht durch Phakopsora pachyrhizi

Eine handelsübliche Fertigformulierung von Triticonazol (Suspensionskonzentrat, Wirkstoffgehalt 200 g/l) wurde mit Wasser auf die in Tabelle 2 angegebene Wirkstoffkonzentration (Wst.-Konz.) verdünnt und angewendet.

Blätter von in Töpfen gewachsenen Sojabohnensämlingen der Sorte "Hutcheson" wurden mit einer Sporensuspension des Sojabohnenrostes (*Phakopsora pachyrhizi*) inokuliert. Danach wurden die Töpfe für 24 Stunden in eine Kammer mit hoher Luftfeuchtigkeit (90 bis 95 %) und 22 bis 24° C gestellt. Während dieser Zeit keimten die Sporen aus und die Keimschläuche drangen in das Blattgewebe ein. Die infizierten Pflanzen wurden 3 Tage später mit einer wässriger Suspension in der in Tabelle 2 angegebenen Wirkstoffkonzentration bis zur Tropfnässe besprüht. Die Suspension oder Emulsion wurde wie oben beschrieben hergestellt. Nach dem Antrocknen des Spritzbelages wurden die Versuchspflanzen im Gewächshaus bei Temperaturen zwischen 22 und 24° C und 80 bis 90 % relativer Luftfeuchte für 17 Tage kultiviert. Dann wurde das Ausmaß der Rostpilzentwicklung auf den Blättern ermittelt. Die Ergebnisse sind in Tabelle 2 zusammengestellt:

**Tabelle 2:**

| Wst.-Konz. | % befallene Blattfläche |
|---|---|
| ppm | (17 DAT)* |
| 0 (unbehandelt) | 80 |
| 1 | 9 |
| 4 | 1 |

## Patentansprüche

1. Verwendung von (*E*)-5-(4-chlorbenzyliden)-2,2-dimethyl-1-(1*H*-1,2,4-triazol-1-ylmethyl)cyclopentanol zur Bekämpfung des Rostbefalls an Sojapflanzen.

2. Verwendung nach Anspruch 1, wobei es sich um einen durch Phakopsora pachyrhizi oder Phakopsora melbomiae ausgelösten Rostbefall handelt.

3. Verwendung nach einem der vorhergehenden Ansprüche, wobei man das Saatgut behandelt.

4. Verwendung nach Anspruch 3, wobei man (*E*)-5-(4-chlorbenzyliden)-2,2-dimethyl-1-(1*H*-1,2,4-triazol-1-ylmethyl)cyclopentanol in einer Menge von 1 bis 500 g pro 100 kg Saatgut einsetzt.

5. Verwendung nach einem der Ansprüche 1 oder 2, wobei man die oberirdischen Pflanzenteile der Sojapflanzen behandelt.

6. Verwendung nach Anspruch 5, wobei man (*E*)-5-(4-chlorbenzyliden)-2,2-dimethyl-1-(1*H*-1,2,4-triazol-ylmethyl)cyclopentanol in einer Menge von 10 bis 1000 g/ha einsetzt.

7. Verwendung nach einem der vorhergehenden Ansprüche, wobei man (*E*)-5-(4-chlorbenzyliden)-2,2-dimethyl-1-(1*H*-1,2,4-triazol-1-ylmethyl)cyclopentanol gemeinsam mit wenigstens einem weiteren Fungizid aus der Gruppe der Azolfungizide, ausgewählt unter Epoxyconazol, Tebuconazol, Fluquinconazol, Flutriafol, Metconazol, Myclobutanil, Cycproconazol, Prothioconazol und Propiconazol einsetzt.

8. Verwendung nach einem der vorhergehenden Ansprüche, wobei man (*E*)-5-(4-chlorbenzyliden)-2,2-dimethyl-1-(1*H*-1,2,4-triazol-1-ylmethyl)cyclopentanol gemeinsam mit wenigstens einem weiteren Fungizid aus der Gruppe der Strobilurine, ausgewählt unter Trifloxystrobin, Pyraclostrobin, Orysastrobin, Fluoxastrobin und Azoxystrobin einsetzt.

9. Verwendung nach einem der vorhergehenden Ansprüche, wobei man (*E*)-5-(4-chlorbenzyliden)-2,2-dimethyl-1-(1*H*-1,2,4-triazol-1-ylmethyl)cyclopentanol gemeinsam mit wenigstens einem Insektizid aus der Gruppe der Pyrazolinsektizide und der Gruppe der Neonicotinoide einsetzt.

10. Verfahren zur Bekämpfung des Rostbefalls an Sojabohnen, wobei man die Sojapflanzen oder deren Saatgut vor oder nach Rostbefall mit einer wirksamen Menge von (*E*)-5-(4-chlorbenzyliden)-2,2-dimethyl-1-(1*H*-1,2,4-triazol-1-ylmethyl)cyclopentanol behandelt.

## Claims

1. The use of (*E*)-5-(4-chlorobenzylidene)-2,2-dimethyl-1-(1*H*-1,2,4-triazol-1-ylmethyl)cyclopentanol for controlling rust disease on soybean plants.

2. The use according to claim 1, wherein the rust disease is caused by Phakopsora pachyrhizi or Phakopsora meibomiae.

3. The use according to one of the preceding claims, wherein the seed is treated.

4. The use according to claim 3, wherein (*E*)-5-(4-chlorobenzylidene)-2,2-dimethyl-1-(1*H*-1,2,4-triazol-1-ylmethyl)cyclopentanol is employed in an amount of from 1 to 500 g per 100 kg of seed.

5. The use according to either of claims 1 or 2, wherein the aerial plant parts of the soybean plants are treated.

6. The use according to claim 5, wherein (*E*)-5-(4-chlorobenzylidene)-2,2-dimethyl-1-(1*H*-1,2,4-triazol-1-ylmethyl)cyclopentanol is employed in an amount of from 10 to 1000 g/ha.

7. The use according to one of the preceding claims, wherein (*E*)-5-(4-chlorobenzylidene)-2,2-dimethyl-1-(1*H*-1,2,4-triazol-1-ylmethyl)cyclopentanol is employed jointly with at least one further fungicide from the group of the azole fungicides selected from among epoxyconazole, tebuconazole, fluquinconazole, flutriafol, metconazole, myclobutanil, cycproconazole, prothioconazole and propiconazole.

8. The use according to one of the preceding claims, wherein (*E*)-5-(4-chlorobenzylidene)-2,2-dimethyl-1-(1*H*-1,2,4-triazol-1-ylmethyl)cyclopentanol is employed jointly with at least one further fungicide from the group of the strobilurins selected from among trifloxystrobin, pyraclostrobin, orysastrobin, fluoxastrobin and azoxystrobin.

9. The use according to one of the preceding claims, wherein (*E*)-5-(4-chlorobenzylidene)-2,2-dimethyl-1-(1*H-*1,2,4-triazol-1-ylmethyl)cyclopentanol is employed jointly with at least one insecticide from the group of the pyrazole insecticides and the neonicotinoid group.

10. A method for controlling rust disease on soybeans, wherein the soybean plants or their seed is/are treated with an effective amount of (*E*)-5-(4-chlorobenzylidene)-2,2-dimethyl-1-(1*H*-1,2,4-triazol-1-ylmethyl)cyclopentanol before or after attack by rust.

## Revendications

1. Utilisation de (*E*)-5-(4-chlorobenzylidène)-2,2-diméthyl-1-(1H-1,2,4-triazol-1-ylméthyl)cyclopentanol dans la lutte contre les attaques de rouille sur les plantes de soja.

2. Utilisation selon la revendication 1, pour laquelle il s'agit d'une attaque de rouille déclenchée par Phakopsora pachyrhizi ou Phakopsora meibomiae.

3. Utilisation selon l'une des revendications précédentes, dans laquelle on traite les semences.

4. Utilisation selon la revendication 3, dans laquelle on utilise le (*E*)-5-(4-chlorobenzylidène)-2,2-diméthyl-1-(1H-1,2,4-triazol-1-ylméthyl)cyclopentanol dans une quantité de 1 à 500 g pour 100 kg de semences.

5. Utilisation selon l'une des revendications 1 ou 2, dans laquelle on traite les parties de plantes en surface des plantes de soja.

6. Utilisation selon la revendication 5, dans laquelle on utilise le (*E*)-5-(4-chlorobenzylidène)-2,2-diméthyl-1-(1H-1,2,4-triazol-1-ylméthyl)cyclopentanol dans une quantité de 10 à 1000 g/ha.

7. Utilisation selon l'une des revendications précédentes, dans laquelle on utilise le (*E*)-5-(4-chlorobenzylidène)-2,2-diméthyl-1-(1H-1,2,4-triazol-1-ylméthyl)cyclopentanol en commun avec au moins un autre fongicide du groupe des fongicides azole, sélectionné parmi les époxyconazole, tébuconazole, fluquinconazole, flutriafol, métconazole, myclobutanile, cycproconazole, prothioconazole et propiconazole.

8. Utilisation selon l'une des revendications précédentes, dans laquelle on utilise le (*E*)-5-(4-chlorobenzylidène)-2,2-diméthyl-1-(1H-1,2,4-triazol-1-ylméthyl)cyclopentanol en commun avec au moins un autre fongicide du groupe des strobilurines, sélectionné parmi les trifloxystrobine, pyraclostrobine, orysastrobine, fluoxastrobine et azoxystrobine.

9. Utilisation selon l'une des revendications précédentes, dans laquelle on utilise le (*E*)-5-(4-chlorobenzylidène)-2,2-diméthyl-1-(1H-1,2,4-triazol-1-ylméthyl)cyclopentanol en commun avec au moins un insecticide du groupe des insecticides pyrazoline et du groupe des néonicotinoïdes.

10. Procédé de lutte contre les attaques de rouille sur des graines de soja, dans lequel les plantes de soja ou leurs semences sont traitées avant ou après l'attaque par la rouille avec une quantité efficace de (*E*)-5-(4-chlorobenzylidène)-2,2-diméthyl-1-(1H-1,2,4-triazol-1-ylméthyl)cyclopentanol.
